# EUROPÄISCHE PATENTSCHRIFT

(11) **EP 1 123 221 B1**
(45) Veröffentlichungstag und Bekanntmachung des Hinweises auf die Patenterteilung: **16.06.2004**
(21) Anmeldenummer: 99953867.1
(22) Anmeldetag: 16.10.1999
(51) Int. Cl.: B60K 28/16, F16H 61/16, B60K 41/28

(54) **VERFAHREN ZUR STEUERUNG EINES AUTOMATGETRIEBES EINES KRAFTFAHRZEUGES**
METHOD FOR CONTROLLING THE AUTOMATIC GEARBOX OF A MOTOR VEHICLE
PROCEDE DE COMMANDE D'UNE BOITE AUTOMATIQUE D'UN VEHICULE AUTOMOBILE

(30) Priorität: 24.10.1998 DE 19849057
(43) Veröffentlichungstag der Anmeldung: 16.08.2001
(73) Patentinhaber: ZF FRIEDRICHSHAFEN Aktiengesellschaft, 88038 Friedrichshafen (DE)
(72) Erfinder: HENNEKEN, Markus, D-88079 Kressbronn (DE); JAUCH, Friedemann, D-88074 Meckenbeuren (DE); HERBSTER, Kai-Uwe, D-88046 Friedrichshafen (DE); SCHULER, Franz-Josef, D-88079 Kressbronn (DE); MAUZ, Thomas, D-88079 Kressbronn (DE)
(86) Internationale Anmeldenummer: PCT/EP1999/007872
(87) Internationale Veröffentlichungsnummer: WO 2000/024604

(56) Entgegenhaltungen:
- EP-A- 0 576 703
- DE-A- 19 743 725

## Beschreibung

Die Erfindung betrifft ein Verfahren zur Steuerung eines Automatgetriebes eines Kraftfahrzeuges mit einer Elektronischen Getriebesteuerung, welche stetig Signale wenigstens mit einer Fahrdynamikregelung austauscht, nach der im Oberbegriff des Patentanspruches 1 näher definierten Art, seihe Dokument EP-A-0 576 703.

Die Nutzung der Intelligenz in der Elektronik findet bei Kraftfahrzeugen mit Automatgetrieben ihren Ausdruck im Einsatz einer Elektronischen Getriebesteuerung (EGS), mit der bekanntlich kundenrelevante Kriterien wie z.B. der Fahrkomfort und Fahrbarkeit als auch sicherheitsrelevante Kriterien in hohem Maße erfüllt werden.

Zur selbsttätigen Auswahl eines in der Elektronischen Getriebesteuerung abgelegten Schaltprogrammes, welches z.B. eine aus der Veröffentlichung "ATZ Automobiltechnische Zeitschrift" 94 (1992) bekannte Fahrertyp-Erkennung, eine Umwelterkennung, eine Fahrsituationserkennung oder eine Erkennung eines manuellen Eingriffs beschreibt, und zur situationsabhängigen Gangwahl kommuniziert die Elektronische Getriebesteuerung stetig mit weiteren Steuergeräten und Rechnern verschiedener Aggregate über einen CAN-(Controller Area Network)-Datenbus.

Aus der Praxis ist es bekannt, daß die Elektronische Getriebesteuerung mit einer Fahrdynamikregelung (FDR) verknüpft ist, welche verschiedene Regelsysteme im Bremssystem und im Antriebsstrang koordiniert und unterstützt. Über die Fahrdynamikregelung werden die Ausgangssignale dieser Regelsysteme, zu denen z.B. ein Anti-Blockiersystem (ABS) gegen ein Blockieren der Räder beim Bremsen, ein Anti-Schlupf-Kontrollsystem (ASC) gegen ein Durchdrehen der Räder bei Antrieb und ein den Eingriff in die Motorsteuerung regelndes Motormanagement zählt, an die Elektronische Getriebesteuerung ausgegeben.

Die Funktionsweise eines Anti-Schlupf-Kontrollsystems ist z.B. aus der DE 34 35 869 A1 und der EP 0 583 610 B1 bekannt.

Bei diesen bekannten Antriebsschlupfregelsystemen wird bei Durchdrehneigung von wenigstens einem angetriebenen Rad das Motormoment reduziert und gleichzeitig zu Beginn der Motormomentreduzierung ein Steuersignal erzeugt, das an die Elektronische Getriebesteuerung eines Automatgetriebes weitergegeben wird. Die Elektronischen Getriebesteuerung leitet daraufhin eine Schaltung in den höheren Gang ein.

Darüber hinaus ist in der EP 0 583 610 B1 ein sogenanntes "Winterprogramm" beschrieben, bei dem abhängig von einem Regelsignal des Anti-Schlupf-Kontrollsystems ein Fahrprogramm mit abtriebsmomentenreduzierenden Schaltkennlinien gestartet wird bis ein Abbruchkriterium erfüllt ist.

Neben einer Fahrdynamikregelung mit einem Anti-Schlupf-Kontrollsystems und einem Anti-Blockiersystem ist aus der Praxis ein eine Dynamische Stabilisierung (DS) darstellendes Sonderprogramm bekannt. Dieses bremst z.B. bei einer kritischen Querbeschleunigung des Fahrzeuges bestimmte Räder einzeln ab, um ein seitliches Ausbrechen des Fahrzeuges zu vermeiden.

Die bekannten Getriebesteuerungsverfahren erweisen sich jedoch in einigen speziellen Betriebssituationen als unzureichend.

Eine dieser speziellen Betriebssituationen ist beispielsweise gegeben, wenn die Fahrdynamikregelung aufgrund eines Signales des Anti-Schlupf-Kontrollsystems oder des Anti-Blockiersystem ein Sonderfahrprogramm mit Schaltungen bei der Elektronischen Getriebesteuerung anfordert, während von der Dynamischen Stabilisierung eine Situation erkannt wird, welche eine Schaltverhinderung erfordert.

Aufgrund der unzureichenden Unterstützung der Dynamischen Stabilisierung durch die Elektronische Getriebesteuerung können hier Lastwechsel durchgeführt werden, welche den Fahrkomfort beeinträchtigen und unter Umständen den vorliegenden unsicheren Fahrzustand weiter destabilisieren.

Der vorliegenden Erfindung liegt die Aufgabe zugrunde, ein Verfahren zur Steuerung eines Automatgetriebes mit einer Elektronischen Getriebesteuerung, welche mit einer Fahrdynamikregelung kommuniziert, zur Verfügung zu stellen, mit dem die Elektronische Getriebesteuerung im Hinblick auf einen besseren Fahrkomfort und eine höhere Sicherheit gleichermaßen auf ein Signal eines Anti-Schlupf-Kontrollsystems oder eines Anti-Blockiersystem wie auf ein Signal einer Dynamischen Stabilisierung reagieren kann.

Erfindungsgemäß wird diese Aufgabe mit einem Verfahren nach dem Patentanspruch 1 gelöst.

Mit Hilfe des erfindungsgemäßen Verfahrens, bei dem die Dynamische Stabilisierung DS in das Regelsystem der Fahrdynamikregelung FDR integriert wird und ein Signal der Dynamischen Stabilisierung DS gleichzeitig mit einem von dem Anti-Schlupf-Kontrollsystem ASC und/oder dem Anti-Blockiersystem ABS eingehenden Signal in der Elektronischen Getriebesteuerung EGS verarbeitet wird, reagiert die Elektronischen Getriebesteuerung in gleicher Weise unterstützend auf die Dynamische Stabilisierung wie auf das Anti-Schlupf-Kontrollsystem oder das Anti-Blockiersystem. Dadurch wird die Fahrzeugstabilität und die Sicherheit in kritischen Fahrsituationen deutlich verbessert.

Die Fahrdynamikregelung bietet z.B. bei Schlupferkennung einen Wechsel in ein Sonderfahrprogramm an, welches alle benötigten Gangschaltkennlinien und Wandlerschaltkennlinien für einen Schlupf vermeidenden Fahrmodus enthält. Die abtriebsmomentreduzierenden Schaltkennlinien dieses Fahrprogramms sollen einen Schlupf auf einer Fahrbahn mit Niederreibwert vermeiden oder wenigstens verringern.

Außerdem bietet die Fahrdynamikregelung FDR die Möglichkeit, Schaltverhinderungen auszulösen, wenn damit die Dynamische Stabilisierung DS unterstützt wird.

Wenn von der Fahrdynamikregelung FDR während einer dynamischen Stabilisierung DS erkannt wird, daß ein bestimmtes Kriterium wie z.B. eine zu hohe Querbeschleunigung erfüllt ist, wird über ein entsprechendes Signal zur Verhinderung von Schaltungen in die elektronische Getriebesteuerung eingegriffen und gegebenenfalls ein Abbremsen bestimmter Räder angefordert, um die Fahrzeugstabilität zu gewährleisten.

Da über eine in der Elektronische Getriebesteuerung EGS abgelegte Funktion nunmehr zusätzlich zu der Verarbeitung des Signales des Anti-Schlupf-Kontrollsystems ASC oder des Anti-Blockiersystems ABS gleichzeitig auch auf ein Signal der Fahrdynamikregelung FDR, Schaltungen zu verhindern, reagiert wird und getriebeseitig die speziellen Zustände der Fahrdynamikregelung berücksichtigt werden, stellt diese mit dem erfindungsgemäßen Verfahren eine getriebeunterstützte dynamische Stabilisierung für das Fahrzeug dar.

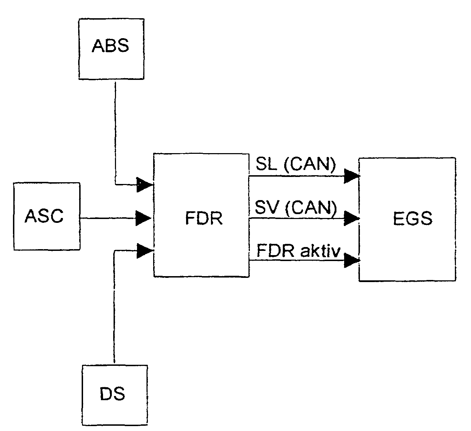

Weitere Vorteile und Weiterbildungen der Erfindung ergeben sich aus den Unteransprüchen und aus dem nachfolgend prinzipmäßig anhand der Zeichnung beschriebenen Ausführungsbeispiel.

In der einzigen Figur ist äußerst schematisch ein erfindungsgemäßes Verfahren zur Steuerung eines Automatgetriebes eines Kraftfahrzeuges mit einer Elektronischen Getriebesteuerung EGS, welche u.a. stetig Signale wenigstens mit einer Digitalen Motorelektronik (nicht dargestellt) und einer Fahrdynamikregelung FDR austauscht, skizziert.

Die Elektronische Getriebesteuerung EGS empfängt über die Fahrdynamikregelung FDR Signale eines mit der Fahrdynamikregelung FDR funktional verknüpften Anti-Schlupf-Kontrollsystems ASC, eines Anti-Blockiersystems ABS und einer Dynamischen Stabilisierung DS, wobei letztere in vordefinierten Betriebssituationen ein Signal SV zur Verhinderung von Schaltungen an die Elektronische Getriebesteuerung EGS ausgibt.

Eine derartige Anforderung eines Zustandes mit Schaltverhinderung seitens der Dynamischen Stabilisierung DS wird in der Elektronische Getriebesteuerung EGS gleichzeitig mit den eine Schaltung anfordernden Signalen des Anti-Schlupf-Kontrollsystem ASC und des Anti-Blockiersystem ABS verarbeitet, wobei ein in Abhängigkeit von den an der EGS eingehenden Signalen der Dynamischen Stabilisierung DS, des Anti-Schlupf-Kontrollsystems ASC und des Anti-Blockiersystems ABS gewähltes Fahrprogramm in die Digitale Motorelektronik, ein Bremssystem und eine Antriebsstrangsteuerung derart eingreift, daß ein seitliches Ausbrechen des Fahrzeuges verhindert wird.

Wenn das Signal des Anti-Schlupf-Kontrollsystems ASC bedeutet, daß ein Schlupf SL vorliegt, und ein Gangwechsel angefordert wird, wird ein Fahrprogramm für Fahrt auf einer Fahrbahn mit Niederreibwert aktiviert, wobei die Gangwechsel entsprechend abtriebsmomentreduzierender Schaltkennlinien gesteuert werden.

Ein derartiges von der Elektronischen Getriebesteuerung EGS auf ein entsprechendes Signal des Anti-Schlupf-Kontrollsystems ASC eingeleitetes Sonderfahrprogramm wird auch "Winterfahrprogramm" genannt.

Die gleichzeitig an der Elektronischen Getriebesteuerung EGS eingehenden Signale werden einer ODER-Funktion mit festgelegter Dominanz zugeführt, wobei das Signal SV zur Schaltverhinderung in der Regel dominant ist.

Das Schlupf anzeigende Signal SL des Anti-Schlupf-Kontrollsystems ASC ist hingegen dominant, wenn erkannt wird, daß eine Abtriebsdrehzahl kleiner als eine Grenzdrehzahl ist. Das Fahrprogramm für Fahrt auf Fahrbahnen mit Niedrigreibwert hat also nur Vorrang bei niedrigen Geschwindigkeiten, da es bei höheren Abtriebsdrehzahlen wieder darauf ankommt, den Fahrzeugzustand möglichst konstant zu halten, d.h. Schaltungen zu vermeiden.

Das Signal SV zur Verhinderung von Schaltungen wird von der Fahrdynamikregelung FDR an die Elektronische Getriebesteuerung EGS ausgegeben, wenn die dynamische Stabilisierung DS aktiviert ist. Dies ist vorliegend der Fall, wenn die Dynamische Stabilisierung DS erkennt, daß eine Querbeschleunigung oder eine Differenz zwischen Drehzahlen einzelner Räder des Fahrzeugs vorliegt, welche über einem vorgegebenen Grenzwert liegt.

Im vorliegenden Fall wird auf das Signal SV zur Verhinderung von Schaltungen von der Elektronischen Getriebesteuerung EGS allgemein eine Schaltverhinderung ausgelöst.

In weiteren Ausführungen kann jedoch auch vorgesehen sein, daß ein Signal zur Verfügung steht, das die Unterscheidung zwischen einer Hochschaltverhinderung und einer Rückschaltverhinderung zuläßt, die dann gesondert in der Elektronischen Getriebesteuerung EGS ausgelöst wird.

Der Zustand der Verhinderung von Schaltungen aufgrund eines von der Dynamische Stabilisierung DS ausgegebenen Signales wird solange aufrecht erhalten, wie das Signal SV empfangen wird und die Fahrdynamikregelung FDR in einer Regelphase ist. Gleichzeitig muß sich die Motordrehzahl noch in einem zulässigen Bereich befinden.

Selbstverständlich können ergänzend oder alternativ als weitere Beendigungskriterien auch das Erkennen eines manuellen Eingriffs, wie z.B. ein manuelles Schalten durch den Fahrer in einem Tip-Betrieb oder eine Wähltasterbetätigung auf "SPORT", oder das Überschreiten einer vordefinierten maximalen Verzögerungszeit vorgesehen sein.

Wenn das Fahrprogrammes für Fahrt auf einer Fahrbahn mit Niederreibwert, d.h. das "Winterfahrprogramm", aktiv ist, wird eines von mehreren Fahrprogrammen für einen Spezialfall gestartet, wobei in der vorgestellten Ausführung ein von einer Fahrbahnneigung wie Steigung, Ebene oder Gefälle abhängiges Fahrprogramm gestartet wird.

Das Winterfahrprogramm bleibt nur unter der Bedingung aktiv, daß die Elektronische Getriebesteuerung EGS neben der Gangwechselanfrage des Anti-Schlupf-Kontrollsystems ASC ein Signal von der Fahrdynamikregelung FDR empfängt, daß sich diese in einer Regelphase befindet und damit aktiv ist.

Falls die Fahrdynamikregelung FDR nicht angeschlossen ist, wird damit verhindert, daß ein spezielles Fahrprogramm trotz eines manuellen Abschaltens oder eines Ausfalls der Fahrdynamikregelung FDR aktiviert wird oder bleibt.

Immer wenn die Fahrdynamikregelung FDR aktiv ist, wird eine in einem Betriebsprogramm der Elektronischen Getriebesteuerung EGS als Schaltprogramm abgelegte Fahrertyp-Erkennung deaktiviert, um in dem speziellen Fahrprogramm, wie hier dem Winterfahrprogramm, ermittelte unrealistische Werte der Fahrertyp-Erkennung zu vermeiden.

Das Winterfahrprogramm kann selbstverständlich auch durch Tip-Betrieb, d.h. manuelles Schalten durch den Fahrer, oder durch eine Wähltasterbetätigung, z.B. das Drücken auf einen Taster "SPORT" beendet werden.

Beim Verlassen des durch die Fahrdynamikregelung FDR aktivierten Winterfahrprogrammes wird in ein vorgegebenes Fahrprogramm, z.B. in ein Fahrprogramm für ökonomisches Fahren, gewechselt.

### Bezeichnungen

- ABS: Anti-Blockiersystem
- ASC: Anti-Schlupf-Kontrollsystem
- CAN: (Controller Area Network)-Datenbus-Signal
- DME: Digitale Motorelektronik
- DS: Dynamische Stabilisierung
- EGS: Elektronische Getriebesteuerung
- FDR: Fahrdynamikregelung
- SL: Signal zur Anzeige eines Schlupfes
- SV: Signal zur Verhinderung von Schaltungen

## Patentansprüche

1. Verfahren zur Steuerung eines Automatgetriebes eines Kraftfahrzeuges mit einer Elektronischen Getriebesteuerung (EGS), welche stetig Signale wenigstens mit einer Fahrdynamikregelung (FDR) austauscht, wobei die Elektronische Getriebesteuerung (EGS) über die Fahrdynamikregelung (FDR) Signale eines Anti-Schlupf-Kontrollsystems (ASC) und/oder eines Anti-Blockiersystems (ABS) empfängt, **dadurch gekennzeichnet, daß** die Fahrdynamikregelung (FDR) funktional mit einer Dynamischen Stabilisierung (DS) verknüpft ist, welche in vordefinierten Betriebssituationen ein Signal zur Verhinderung von Schaltungen über die Fahrdynamikregelung (FDR) an die Elektronische Getriebesteuerung (EGS) ausgibt, welches gleichzeitig mit den von dem Anti-Schlupf-Kontrollsystem (ASC) und/oder dem Anti-Blockiersystem (ABS) eingehenden Signalen (SL) verarbeitet wird.

2. Verfahren nach Anspruch 1, **dadurch gekennzeichnet, daß** die gleichzeitig an der Elektronischen Getriebesteuerung (EGS) eingehenden, eine Schaltung anfordernden Signale (SL) des Anti-Schlupf-Kontrollsystems (ASC) und/oder des Anti-Blockiersystems (ABS) einerseits und die eine Schaltverhinderung anfordernden Signale (SV) der Dynamischen Stabilisierung (DS) andererseits in einer ODER-Funktion nach festgelegter Dominanz verarbeitet werden.

3. Verfahren nach Anspruch 1, **dadurch gekennzeichnet, daß** das Signal (SV) zur Verhinderung von Schaltungen von der Fahrdynamikregelung (FDR) an die Elektronische Getriebesteuerung (EGS) ausgegeben wird, wenn die dynamische Stabilisierung (DS) aktiviert ist.

4. Verfahren nach einem der Ansprüche 1 bis 3, **dadurch gekennzeichnet, daß** das Signal (SV) zur Verhinderung von Schaltungen von der Elektronischen Getriebesteuerung (EGS) als generelle Schaltverhinderung oder Hochschaltverhinderung und/oder Rückschaltverhinderung erkannt wird.

5. Verfahren nach einem der Ansprüche 1 bis 4, **dadurch gekennzeichnet, daß** ein Zustand der Verhinderung von Schaltungen aufgrund des von der Dynamische Stabilisierung (DS) ausgegebenen Signales (SV) beendet wird, wenn eine Motordrehzahl einen Grenzwert über- oder unterschreitet oder ein als Beendigungskriterium festgelegter manueller Eingriff erkannt wird oder eine vordefinierte maximale Verzögerungszeit überschritten wird.

6. Verfahren nach einem der Ansprüche 1 bis 5, **dadurch gekennzeichnet, daß** die Dynamische Stabilisierung (DS) aktiviert wird, wenn erkannt wird, daß eine Querbeschleunigung und/oder eine Differenz zwischen Drehzahlen einzelner Räder des Fahrzeugs vorliegt, welche über einem vorgegebenen Grenzwert liegt.

7. Verfahren nach einem der Ansprüche 1 bis 6, **dadurch gekennzeichnet, daß** die Elektronische Getriebesteuerung (EGS) bei einem eine Schaltung anfordernden Signal (SL) des Anti-Schlupf-Kontrollsystems (ASC), daß Schlupf vorliegt, ein Fahrprogramm für Fahrt auf einer Fahrbahn mit Niederreibwert aktiviert, wobei die Gangwechsel entsprechend abtriebsmomentreduzierender Schaltkennlinien gesteuert werden.

8. Verfahren nach Anspruch 7, **dadurch gekennzeichnet, daß** das Signal (SL) des Anti-Schlupf-Kontrollsystems (ASC), daß Schlupf vorliegt, gegenüber dem eine Schaltverhinderung anfordernden Signal (SV) der Dynamischen Stabilisierung (DS) dominant ist und das Fahrprogramm für Fahrt bei Niedrigreibwert gestartet wird, wenn erkannt wird, daß eine Abtriebsdrehzahl kleiner als eine Grenzdrehzahl ist.

9. Verfahren nach einem der Ansprüche 7 oder 8, **dadurch gekennzeichnet, daß** bei Aktivierung des Fahrprogrammes für Fahrt auf einer Fahrbahn mit Niederreibwert ein Sonderfahrprogramm in Abhängigkeit von einer Fahrbahnneigung gestartet wird.

10. Verfahren nach einem der Ansprüche 7 bis 9, **dadurch gekennzeichnet, daß** beim Verlassen des durch die Fahrdynamikregelung aktivierten Fahrprogrammes für Fahrt auf einer Fahrbahn mit Niederreibwert in ein vorgegebenes Fahrprogramm gewechselt wird.

11. Verfahren nach einem der Ansprüche 1 bis 10, **dadurch gekennzeichnet, daß** ein in Abhängigkeit von den Signalen (SL, SV) der Dynamischen Stabilisierung (DS) und/oder und des Anti-Schlupf-Kontrollsystems (ASC) und/oder des Anti-Blockiersystems (ABS) gewähltes Fahrprogramm in die Digitale Motorelektronik (DME) und/oder ein Bremssystem und/oder eine Antriebsstrangsteuerung derart eingreift, daß ein seitliches Ausbrechen des Fahrzeuges verhindert wird.

12. Verfahren nach einem der Ansprüche 1 bis 11, **dadurch gekennzeichnet, daß** ein von den Signalen (SL, SV) des Anti-Schlupf-Kontrollsystem (ASC) und/oder des Anti-Blockiersystems (ABS) und/oder der Dynamischen Stabilisierung (DS) abhängiges Fahrprogramm nur durchgeführt wird, wenn die Fahrdynamikregelung (FDR) von der Elektronischen Getriebesteuerung (EGS) als aktiviert erkannt wird.

13. Verfahren nach einem der Ansprüche 1 bis 12, **dadurch gekennzeichnet, daß** eine in einem Betriebsprogramm der Elektronischen Getriebesteuerung (EGS) als Schaltprogramm abgelegte Fahrertyperkennung deaktiviert wird, wenn die Fahrdynamikregelung (FDR) als aktiv erkannt wird.

## Claims

1. Method for controlling an automatic transmission of a motor vehicle with an electronic transmission control system (EGS) which constantly exchanges signals with a driving dynamics regulation system (FDR), wherein the electronic transmission control system (EGS) receives signals via the driving dynamics regulation system (FDR) from an anti-skid control system (ASC) and/or an anti-lock braking system (ABS), **characterised in that** the driving dynamics regulation system (FDR) is linked in functional terms with a dynamic stabilisation system (DS) which, in predefined operating situations, delivers a signal to inhibit gearshifts via the driving dynamics regulation system (FDR) to the electronic transmission control system (EGS) which is processed at the same time as the signals (SL) incoming from the anti-skid control system (ASC) and/or the anti-lock braking system (ABS).

2. Method according to Claim 1, **characterised in that** the signals (SL) from the anti-skid control system (ASC) and/or the anti-lock braking system (ABS) incoming at the same time at the electronic transmission control system (EGS) and requesting a gearshift on the one hand, and the signals (SV) from the dynamic stabilisation system (DS) requesting gearshift inhibition on the other are processed in an OR function according to fixed priority.

3. Method according to Claim 1, **characterised in that** the signal (SV) to inhibit gearshifts is delivered by the driving dynamics regulation system (FDR) to the electronic transmission control system (EGS) when the dynamic stabilisation system (DS) is activated.

4. Method according to any one of Claims 1 to 3, **characterised in that** the signal (SV) to inhibit gearshifts is identified by the electronic transmission control system (EGS) as a general gearshift inhibition or upshift inhibition and/or downshift inhibition.

5. Method according to any one of Claims 1 to 4, **characterised in that** a gearshift inhibition state on the basis of the signal (SV) delivered by the dynamic stabilisation system (DS) is terminated when an engine speed exceeds or falls below a limit value or a manual intervention determined as a termination criterion is identified or a predefined maximum delay time is exceeded.

6. Method according to any one of Claims 1 to 5, **characterised in that** the dynamic stabilisation system (DS) is activated when a transverse acceleration and/or a difference between speeds of individual wheels of the vehicle which exceeds a predetermined limit value are/is identified.

7. Method according to any one of Claims 1 to 6, **characterised in that** the electronic transmission control system (EGS) activates a driving program for driving on a roadway with a low coefficient of friction in the event of a signal (SL) from the anti-skid control system (ASC) that slip is occurring which requests a gearshift, wherein the gear changes are controlled according to shift characteristics which reduce the output torque.

8. Method according to Claim 7, **characterised in that** the signal (SL) from the anti-skid control system (ASC) that slip is occurring has priority over the signal (SV) from the dynamic stabilisation system (DS) requesting gearshift inhibition, and the driving program for driving with a low coefficient of friction is started when an output speed which is lower than a limit speed is identified.

9. Method according to either of Claims 7 or 8, **characterised in that** a special driving program is started in accordance with a roadway slope upon activating the driving program for driving on a roadway with a low coefficient of friction.

10. Method according to any one of Claims 7 to 9, **characterised in that** a change to a predetermined driving program takes place upon leaving the driving program for driving on a roadway with a low coefficient of friction which is activated by the driving dynamics regulation system.

11. Method according to any one of Claims 1 to 10, **characterised in that** a driving program which is selected in accordance with the signals (SL, SV) from the dynamic stabilisation system (DS) and/or the anti-skid control system (ASC) and/or the anti-lock braking system (ABS) intervenes in the digital engine electronics system (DME) and/or a braking system and/or a drive train control system so as to prevent the vehicle from breaking away to the side.

12. Method according to any one of Claims 1 to 11, **characterised in that** a driving program which is dependent on the signals (SL, SV) from the anti-skid control system (ASC) and/or the anti-lock braking system (ABS) and/or the dynamic stabilisation system (DS) is only executed if the driving dynamics regulation system (FDR) is identified as activated by the electronic transmission control system (EGS).

13. Method according to any one of Claims 1 to 12, **characterised in that** a driver-type identification which is stored in an operating program of the electronic transmission control system (EGS) as a shift program is deactivated when the driving dynamics regulation system (FDR) is identified as active.

## Revendications

1. Procédé de commande d'une transmission automatique d'un véhicule automobile qui comprend une commande de transmission électronique (EGS) qui échange constamment des signaux avec au moins une régulation de dynamique de marche (FDR), la commande de transmission électronique (EGS) recevant, par l'intermédiaire de la régulation de dynamique de marche (FDR), des signaux d'un système de commande anti-patinage (ASC) et/ou d'un système antiblocage (ABS), **caractérisé en ce que** la régulation de dynamique de marche (FDR) est combinée fonctionnellement à une stabilisation dynamique (DS) qui, dans des situations de fonctionnement prédéfinies, envoie un signal pour l'interdiction de changements de rapport à la commande de transmission électronique (EGS) par l'intermédiaire de la régulation de dynamique de marche (FDR), signal qui est traité simultanément avec les signaux (SL) arrivant du système de commande anti-patinage (ASC) et/ou du système antiblocage (ABS).

2. Procédé selon la revendication 1, **caractérisé en ce que** les signaux (SL) du système de commande anti-patinage (ASC) et/ou du système de commande antiblocage (ABS) arrivant simultanément à la commande de transmission électronique (EGS) et qui demandent un changement de rapport, d'une part, et les signaux (SV) de la stabilisation dynamique (DS) qui demandent une interdiction de changement de rapport, d'autre part, sont traités dans une fonction OU d'après une prédominance définie.

3. Procédé selon la revendication 1, **caractérisé en ce que** le signal (SV) d'interdiction de changements de rapport provenant de la régulation de dynamique de marche (FDR) est envoyé à la commande de transmission électronique (EGS) lorsque la stabilisation dynamique (DS) est activée.

4. Procédé selon l'une des revendications 1 à 3, **caractérisé en ce que** le signal (SV) pour l'interdiction de changements de rapport est reconnu par la commande de transmission électronique (EGS) comme interdiction générale de changement de rapport ou comme interdiction de changement de rapport en montée et/ou interdiction de changement de rapport en rétrogradation.

5. Procédé selon l'une des revendications 1 à 4, **caractérisé en ce qu'**un état d'interdiction de changement de rapport résultant du signal (SV) émis par la stabilisation dynamique (DS) est interrompu lorsqu'une vitesse de rotation du moteur devient supérieure ou inférieure à une valeur limite ou lorsqu'une intervention manuelle définie comme critère d'interruption est détectée, ou encore lorsqu'un temps de temporisation maximum prédéfini est dépassé.

6. Procédé selon l'une des revendications 1 à 5, **caractérisé en ce que** la stabilisation dynamique (DS) est activée en réponse à la détection de la présence d'une accélération transversale et/ou d'une différence entre les vitesses de rotation de différentes roues du véhicule qui se trouve au-delà d'une valeur limite prédéterminée.

7. Procédé selon l'une des revendications 1 à 6, **caractérisé en ce que**, en présence d'un signal (SL) du système de commande anti-patinage (ASC) qui indique qu'on est en présence d'un patinage, la commande de transmission électronique (EGS) active un programme de marche pour la conduite sur une chaussée à faible coefficient de frottement, les changements de vitesse étant commandés conformément à des caractéristiques de changement de rapport qui réduisent le couple de sortie.

8. Procédé selon la revendication 7, **caractérisé en ce que** le signal (SL) du système de commande anti-patinage (ASC) indiquant qu'on est en présence d'un patinage, est prédominant par rapport au signal (SV) de la stabilisation dynamique (DS) qui demande une interdiction de changement de rapport, et le programme de marche pour la conduite avec faible coefficient de frottement est démarré lorsqu'il est reconnu qu'une vitesse de rotation de sortie est inférieure à une vitesse de rotation limite.

9. Procédé selon l'une des revendications 7 ou 8, **caractérisé en ce que**, lors de l'activation du programme de marche pour la conduite sur une chaussée à faible coefficient de frottement, un programme de marche spécial est démarré en fonction d'une pente de la chaussée.

10. Procédé selon l'une des revendications 7 à 9, **caractérisé en ce que**, lors de l'abandon du programme de marche activé par la régulation de dynamique de marche, pour la conduite sur une chaussée à faible coefficient de frottement, on passe à un programme de marche prédéterminé.

11. Procédé selon l'une des revendications 1 à 10, **caractérisé en ce qu'**un programme de marche sélectionné en fonction des signaux (SL, SV) de la stabilisation dynamique (DS) et/ou du système de commande anti-patinage (ASC) et/ou du système antiblocage (ABS) intervient dans l'électronique numérique de moteur (DME) et/ou dans un système de freinage et/ou dans une commande de la chaîne cinématique de manière à éviter un dérapage latéral du véhicule.

12. Procédé selon l'une des revendications 1 à 11, **caractérisé en ce qu'**un programme de marche qui dépend des signaux (SL, SV) du système de commande anti-patinage (ASC) et/ou du système antiblocage (ABS) et/ou de la stabilisation dynamique (DS) n'est exécuté que si la régulation de la dynamique de marche (FDR) est reconnue comme activée par la commande de transmission électronique (EGS).

13. Procédé selon l'une des revendications 1 à 12, **caractérisé en ce qu'**une reconnaissance du type de conducteur qui est enregistrée dans un programme de fonctionnement de la commande de transmission électronique (EGS) en tant que programme de changement de rapport est désactivé lorsqu'il est détecté que la régulation de dynamique de marche (FDR) est active.
